# EUROPEAN PATENT APPLICATION

(11) **EP 4 761 331 A1**
(43) Date of publication of application: **17.06.2026**
(21) Application number: 23947931.4
(22) Date of filing: 07.08.2023
(51) Int. Cl.: H04W 24/06

(54) **MEASUREMENT METHOD, AND TERMINAL, NETWORK DEVICE, COMMUNICATION SYSTEM AND STORAGE MEDIUM**

(71) Applicant: Beijing Xiaomi Mobile Software Co., Ltd., Beijing 100085 (CN)
(72) Inventor: TAO, Xuhua, Beijing 100085 (CN)
(74) Representative: Stöckeler, Ferdinand
(86) International application number: PCT/CN2023/111602
(87) International publication number: WO 2025/030350

(57) **Abstract**

The present disclosure relates to a measurement method, and a terminal, a network device, a communication system and a storage medium. The method comprises: on the basis of a first measurement sample, using a first model to determine a first measurement result, wherein the first measurement sample is a measurement sample that is obtained by a terminal performing an actual measurement; and sending the first measurement result, wherein the first measurement result is used for radio resource management. A terminal can use a first model to implement the prediction for a first measurement result on the basis of a first measurement sample, such that it is unnecessary to perform measurement on each measurement occasion, and thus the accuracy of a measurement result can be ensured, and the power consumption of the terminal is also effectively reduced.

## Description

### FIELD

The present disclosure relates to the field of communication technologies, and more particularly to a measurement method, a terminal, a network device, a communication system and a storage medium.

### BACKGROUND

The main purpose of radio resource management (RRM) measurement is to monitor the communication quality of a serving cell and/or a neighbor cell of a terminal in real time, and the RRM measurement is an indispensable part in a communication process between a wireless terminal and a network device.

### SUMMARY

In order to ensure the accuracy of measurement, measurement methods in the related art put great pressure on the power consumption of terminals.

Embodiments of the present disclosure provide a measurement method, a terminal, a network device, a communication system and a storage medium.

According to a first aspect of embodiments of the present disclosure, a measurement method is proposed. The measurement method is performed by a terminal, and includes:
determining a first measurement result using a first model according to a first measurement sample, where the first measurement sample is a measurement sample actually measured by the terminal; and
sending the first measurement result, where the first measurement result is configured for radio resource management.

According to a second aspect of embodiments of the present disclosure, a measurement method is proposed. The measurement method is performed by a network device, and includes:
receiving a first measurement result, where the first measurement result is configured for radio resource management, and the first measurement result is determined using a first model according to a first measurement sample, where the first measurement sample is a measurement sample actually measured by a terminal.

According to a third aspect of embodiments of the present disclosure, a terminal is provided. The terminal includes:
a processing module configured to determine a first measurement result using a first model according to a first measurement sample, where the first measurement sample is a measurement sample actually measured by the terminal; and
a transceiver module configured to send the first measurement result, where the first measurement result is configured for radio resource management.

According to a fourth aspect of embodiments of the present disclosure, a network device is provided. The network device includes:
a transceiver module configured to receive a first measurement result, where the first measurement result is configured for radio resource management, and the first measurement result is determined using a first model according to a first measurement sample, where the first measurement sample is a measurement sample actually measured by a terminal.

According to a fifth aspect of embodiments of the present disclosure, a terminal is provided. The terminal includes:
one or more processors; and
a memory coupled to the one or more processors, and storing executable instructions which, when executed by the one or more processors, cause the terminal to perform the measurement method described in the first aspect.

According to a sixth aspect of embodiments of the present disclosure, a network device is provided. The network device includes:
one or more processors; and
a memory coupled to the one or more processors, and storing executable instructions which, when executed by the one or more processors, cause the network device to perform the measurement method described in the second aspect.

According to a seventh aspect of embodiments of the present disclosure, a communication system is proposed. The communication system includes a terminal and a network device, where the terminal is configured to perform the measurement method described in the first aspect, and the Internet of Things device is configured to perform the measurement method described in the second aspect.

According to an eighth aspect of embodiments of the present disclosure, a storage medium is proposed. The storage medium stores instructions which, when executed on a communication device, cause the communication device to perform the measurement method according to the first aspect or the second aspect.

The present disclosure may ensure the accuracy of measurement while effectively reducing the power consumption of the terminal.

### BRIEF DESCRIPTION OF THE DRAWINGS

In order to more clearly explain the technical scheme in embodiments of the present disclosure, the following drawings are introduced, which are only some embodiments of the present disclosure and do not specifically limit the protection scope of the present disclosure.
Fig. 1A is an illustrative schematic diagram of an architecture of a communication system according to an embodiment of the present disclosure.
Fig. 1B is an illustrative schematic diagram of a measurement method according to an embodiment of the present disclosure.
Fig. 2A is an illustrative interactive schematic diagram of a measurement method according to an embodiment of the present disclosure.
Fig. 2B is an illustrative schematic diagram of a measurement method according to an embodiment of the present disclosure.
Fig. 2C is an illustrative schematic diagram of a measurement method according to an embodiment of the present disclosure.
Fig. 3A is an illustrative flowchart of a measurement method according to an embodiment of the present disclosure.
Fig. 3B is an illustrative flowchart of a measurement method according to an embodiment of the present disclosure.
Fig. 3C is an illustrative flowchart of a measurement method according to an embodiment of the present disclosure.
Fig. 3D is an illustrative flowchart of a measurement method according to an embodiment of the present disclosure.
Fig. 4A is an illustrative flowchart of a measurement method according to an embodiment of the present disclosure.
Fig. 4B is an illustrative flowchart of a measurement method according to an embodiment of the present disclosure.
Fig. 4C is an illustrative flowchart of a measurement method according to an embodiment of the present disclosure.
Fig. 5 is an illustrative interactive schematic diagram of a measurement method according to an embodiment of the present disclosure.
Fig. 6 is an illustrative flowchart of a measurement method according to an embodiment of the present disclosure.
Fig. 7A is an illustrative block diagram of a terminal according to an embodiment of the present disclosure.
Fig. 7B is an illustrative block diagram of a network device according to an embodiment of the present disclosure.
Fig. 8A is an illustrative block diagram of a communication device according to an embodiment of the present disclosure.
Fig. 8B is an illustrative block diagram of a communication device according to an embodiment of the present disclosure.

### DETAILED DESCRIPTION

Embodiments of the present disclosure provide a measurement method, a terminal, a network device, a communication system and a storage medium.

In a first aspect, embodiments of the present disclosure propose a measurement method, which is performed by a terminal, and includes:
determining a first measurement result using a first model according to a first measurement sample, where the first measurement sample is a measurement sample actually measured by the terminal; and
sending the first measurement result, where the first measurement result is used for radio resource management.

In the above embodiments, the terminal may predict the first measurement result based on the first measurement sample using the first model, so that it is unnecessary to perform measurement at every measurement occasion, and the power consumption of the terminal may be effectively reduced while ensuring the accuracy of the measurement result.

In combination with some embodiments of the first aspect, in some embodiments, the first measurement result includes at least one of:
a measurement result in an idle state;
a measurement result in an inactive state; or
a measurement result in a connected state.

In the above embodiments, by measuring one or more of the above measurement results, the diversity of the measurement results may be effectively improved, and thus the reliability of radio resource management may be effectively improved.

In combination with some embodiments of the first aspect, in some embodiments, determining the first measurement result using the first model according to the first measurement sample comprises:
determining a second measurement sample using the first model according to the first measurement sample, where a sum of a numeric count of the first measurement sample and a numeric count of the second measurement sample is equal to a first numeric count, and the first numeric count is a numeric count of measurement samples required by the terminal to determine the first measurement result without using the first model; and
determining the first measurement result according to the first measurement sample and the second measurement sample.

In combination with some embodiments of the first aspect, in some embodiments, determining the second measurement sample using the first model according to the first measurement sample includes:
inputting the first measurement sample and a first parameter corresponding to the first model into the first model to obtain the second measurement sample.

In combination with some embodiments of the first aspect, in some embodiments, determining the first measurement result according to the first measurement sample and the second measurement sample includes:
calculating an average value of the first measurement sample and the second measurement sample to obtain the first measurement result.

In the above embodiments, the terminal may predict the measurement sample corresponding to the measurement occasion for measurement based on the first measurement sample using the first model, and determine the first measurement result based on the predicted measurement sample and the actually measured measurement sample, which may ensure the accuracy of the measurement result and also effectively reduce the power consumption of the terminal.

In combination with some embodiments of the first aspect, in some embodiments, determining the first measurement result using the first model according to the first measurement sample whose numeric count is the second numeric count includes:
inputting consecutive first measurement results whose numeric count is the second numeric count and a second parameter corresponding to the first model into the first model to obtain the first measurement result output by the first model.

In combination with some embodiments of the first aspect, in some embodiments, the second numeric count is a numeric count of measurement samples actually measured within a duration corresponding to N measurement occasions before a current moment, the second numeric count is smaller than the first numeric count, and the first numeric count is a numeric count of measurement samples required by the terminal to determine the first measurement result without using the first model, where the first numeric count is equal to N.

In the above embodiments, the terminal may predict the first measurement result using the first model based on a small number of first measurement samples, which may effectively reduce the power consumption of the terminal while ensuring the accuracy of the measurement result.

In combination with some embodiments of the first aspect, in some embodiments, before determining the first measurement result using the first model according to the first measurement sample, the method includes:
receiving first information configured to indicate the terminal to determine the first measurement result using the first model.

In the above embodiments, the network may indicate the terminal whether to determine the first measurement result using the first model by sending the first information, so that the network may schedule the measurement mode of the terminal and effectively ensure the reliability of the terminal measurement.

In combination with some embodiments of the first aspect, in some embodiments, before determining the first measurement result using the first model according to the first measurement sample, the method includes:
sending second information indicating that the terminal has a capability to determine the first measurement result using the first model; and
receiving first information, where the first information is sent by a network device in response to determining that the second information is received, and the first information is configured to indicate the terminal to determine the first measurement result using the first model.

In the above embodiments, the terminal may send the information indicating whether it has the capability to determine the first measurement result using the first model, so that the network may schedule the measurement mode of the terminal based on the capability of the terminal, thus effectively ensuring the reliability of the terminal measurement.

In connection with some embodiments of the first aspect, in some embodiments, the method includes:
sending third information indicating that the first measurement result is determined using the first model.

In the above embodiments, the terminal may indicate that the first measurement result is determined using the first model by sending the third information, so that the network may know the measurement mode of the terminal, which may effectively improve the reliability of the radio resource management.

In combination with some embodiments of the first aspect, in some embodiments, determining the first measurement result using the first model according to the first measurement sample includes:
determining that a first condition is satisfied, and determining the first measurement result using the first model according to the first measurement sample, where the first condition includes at least one of:
first information being received, where the first information is sent by a network device and configured to indicate the terminal to determine the first measurement result using the first model;
a measurement value of the first measurement sample being greater than or equal to a first measurement threshold; or
a power of the terminal being less than or equal to a first power threshold.

In the above embodiments, the terminal may use the first model to predict the first measurement result only when the first condition is met, thus further ensuring the reliability of the first measurement result.

In combination with some embodiments of the first aspect, in some embodiments, the first measurement threshold and/or the first power threshold are indicated by the network device through fourth information.

In the above embodiments, the network may indicate the first measurement threshold and/or the first power threshold, thus effectively improving the flexibility of scheduling the measurement mode of the terminal.

In combination with some embodiments of the first aspect, in some embodiments, the first measurement sample is measured according to a synchronization signal block (SSB) and/or a channel state information reference signal (CSI-RS).

In a second aspect, embodiments of the present disclosure propose a measurement method, which is performed by a network device, and includes:
receiving a first measurement result, where the first measurement result is configured for radio resource management, and the first measurement result is determined using a first model according to a first measurement sample, where the first measurement sample is a measurement sample actually measured by a terminal.

In combination with some embodiments of the second aspect, in some embodiments, the first measurement result includes at least one of:
a measurement result in an idle state;
a measurement result in an inactive state; or
a measurement result in a connected state.

In combination with some embodiments of the second aspect, in some embodiments, the first measurement result is determined according to the first measurement sample and a second measurement sample, the second measurement sample is determined using the first model according to the first measurement sample, a sum of a numeric count of the first measurement sample and a numeric count of the second measurement sample is equal to a first numeric count, and the first numeric count is a numeric count of measurement samples required by the terminal to determine the first measurement result without using the first model.

In combination with some embodiments of the second aspect, in some embodiments, the first measurement result is determined using the first model according to the first measurement sample whose numeric count is a second numeric count, the second numeric count is smaller than the first numeric count, and the first numeric count is a numeric count of measurement samples required by the terminal to determine the first measurement result without using the first model.

In combination with some embodiments of the second aspect, in some embodiments, the method includes:
sending first information, where the first information is configured to indicate the terminal to determine the first measurement result using the first model.

In combination with some embodiments of the second aspect, in some embodiments, the method includes:
receiving second information indicating that the terminal has a capability to determine the first measurement result using the first model; and
determining that the second information is received, and sending first information, where the first information is configured to indicate the terminal to determine the first measurement result using the first model.

In combination with some embodiments of the second aspect, in some embodiments, the method includes:
receiving third information indicating that the first measurement result is determined using the first model.

In combination with some embodiments of the second aspect, in some embodiments, the first measurement result is determined by the terminal using the first model when it is determined that a first condition is satisfied, and the first condition includes at least one of:
the terminal receiving first information;
a measurement value of the first measurement sample being greater than or equal to a first measurement threshold; or
a current power of the terminal being less than or equal to a first power threshold.

In combination with some embodiments of the second aspect, in some embodiments, the method includes:
sending fourth information indicating a first measurement threshold and/or a first power threshold, where the first measurement threshold and/or the first power threshold are configured for the terminal to determine whether to determine the first measurement result using the first model.

In combination with some embodiments of the second aspect, in some embodiments, the first measurement sample is measured according to a synchronization signal block (SSB).

In a third aspect, embodiments of the present disclosure propose a terminal, which includes at least one of a transceiver module and a processing module. The terminal is configured to perform the optional implementations of the first aspect.

In a fourth aspect, embodiments of the present disclosure propose an Internet of Things device, which includes at least one of a transceiver module and a processing module. The network device is configured to perform the optional implementations of the second aspect.

In a fourth aspect, embodiments of the present disclosure propose a terminal, which includes: one or more processors; and a memory for storing instructions executable by the processor. The processor is configured to perform the optional implementations of the first aspect.

In a fifth aspect, embodiments of the present disclosure propose a network device, which includes: one or more processors; and a memory for storing instructions executable by the processor. The processor is configured to perform the optional implementations of the second aspect.

In a sixth aspect, embodiments of the present disclosure propose a communication system, which includes a terminal and a network device. The terminal is configured to perform the method described in the optional implementations of the first aspect, and the network device is configured to perform the method described in the optional implementations of the second aspect.

In a seventh aspect, embodiments of the present disclosure propose a storage medium storing instructions which, when executed on a communication device, cause the communication device to perform the methods as described in the optional implementations of the first aspect and the second aspect.

In an eighth aspect, embodiments of the present disclosure propose a program product which, when executed by a communication device, causes the communication device to perform the methods as described in the optional implementations of the first aspect and the second aspect.

In a ninth aspect, embodiments of the present disclosure propose a computer program which, when run on a computer, causes the computer to perform the methods as described in the optional implementations of the first aspect and the second aspect.

In a tenth aspect, embodiments of the present disclosure provide a chip or a chip system, which includes a processing circuit configured to perform the methods described according to the optional implementations of the first aspect and the second aspect.

It may be understood that the above terminal, network device, communication system, storage medium, program product, computer program, chip or chip system are all used to execute the methods proposed in the embodiments of the present disclosure. Therefore, for the beneficial effects they may achieve reference may be made to the beneficial effects in the corresponding methods, which will not be repeated here.

The embodiments of the present disclosure provide a measurement method, a terminal, a network device, a communication system and a storage medium. In some embodiments, terms such as measurement method, information processing method and communication method may be used interchangeably, terms such as measurement device, information processing device and communication device may be used interchangeably, and terms such as information processing system and communication system may be used interchangeably.

The embodiments of the present disclosure are not exhaustive, but only schematic illustrations of some embodiments, and are not taken as specific limitations on the protection scope of the present disclosure. Without contradiction, each step in an embodiment may be implemented as an independent embodiment, and various steps may be arbitrarily combined. For example, the scheme after removing some steps in an embodiment may also be implemented as an independent embodiment, and the orders of various steps in an embodiment may be arbitrarily exchanged. In addition, optional implementations in an embodiment may be arbitrarily combined. In addition, various embodiments may be arbitrarily combined, for example, some or all steps of different embodiments may be arbitrarily combined, and an embodiment may be arbitrarily combined with optional implementations of another embodiment.

In the embodiments of the present disclosure, unless there are special explanations and logical conflicts, the terms and/or descriptions among the embodiments are consistent and may be quoted from each other, and the technical features in different embodiments may be combined to form a new embodiment according to their inherent logical relations.

The terms used in the embodiments of the present disclosure are only for the purpose of describing specific embodiments, and are not used as limitations on the present disclosure.

In the embodiments of the present disclosure, unless otherwise stated, elements expressed in a singular form, such as "a", "an", "the", "said", "foregoing", "aforementioned", "preceding", "this", etc., may refer to "one and only one" or "one or more", "at least one", etc. For example, when an article such as "a", "an", or "the" is used in translation, the noun following the article may be understood as a singular expression or a plural expression.

In the embodiments of the present disclosure, "a/the plurality of" refers to two or more.

In some embodiments, terms such as "at least one of", "one or more", "a plurality of", "multiple", etc., may be used interchangeably.

In some embodiments, expressions such as "at least one of A and B", "A and/or B", "in a case, A, and in another case, B", "in response to a case, A, and in response to another case, B", etc., may include the following technical solutions depending on the situation: in some embodiments, A (performing A independently of B); in some embodiments, B (performing B independently of A); in some embodiments, selecting to perform A or B (performing A and B selectively); in some embodiments, both A and B (performing both A and B). When there are more branches such as A, B, C, etc., the above similarly applies.

In some embodiments, expressions such as "A or B" may include the following technical solutions depending on the situation: in some embodiments, A (performing A independently of B); in some embodiments, B (performing B independently of A); in some embodiments, selecting to perform A or B (performing A and B selectively). When there are more branches such as A, B, C, etc., the above similarly applies.

Prefix terms such as "first", "second", etc., in the embodiments of the present disclosure are only used to distinguish different described objects, and do not limit the position, order, priority, quantity, or content of the described objects. The description of the objects refers to the context of the claims or embodiments, and should not be construed as redundant limitations due to the use of the prefix terms. For example, if the described object is a "field", the ordinal numbers before "field" in a "first field" and a "second field" do not limit the position or order of the "fields", and "first" and "second" do not limit whether the "fields" they modify are in the same message, nor do they limit the sequence of the "first field" and the "second field". For another example, if the described object is a "level", the ordinal numbers before "level" in a "first level" and a "second level" do not limit the priority between the "levels". For another example, the quantity of the described objects is not limited by the ordinal numbers and may be one or more. Taking a "first device" as an example, the quantity of the "device" may be one or more. In addition, objects modified by different prefix terms may be the same or different. For example, if the described object is a "device", a "first device" and a "second device" may be the same device or different devices, and their types may be the same or different. For another example, if the described object is "information", "first information" and "second information" may be the same information or different information, and their content may be the same or different.

In some embodiments, "comprising A", "including A", "indicating A", and "carrying A" may be interpreted as directly carrying A or indirectly indicating A.

In some embodiments, the terms "time/frequency" and "time-frequency domain" refer to time domain and/or frequency domain.

In some embodiments, terms such as "in response to...", "in response to determining...", "in a case of...", "when...", "if...", etc., may be used interchangeably.

In some embodiments, terms such as "greater than", "greater than or equal to", "not less than", "more than", "more than or equal to", "not fewer than", "higher than", "higher than or equal to", "not lower than", "above", etc., may be used interchangeably; and terms such as "less than", "less than or equal to", "not greater than", "fewer than", "fewer than or equal to", "not more than", "lower than", "lower than or equal to", "not higher than", "below", etc., may be used interchangeably.

In some embodiments, terms such as "apparatus", etc., may be interpreted as physical or virtual, and their names are not limited to the names recorded in the embodiments. Terms such as "apparatus", "equipment", "device", "circuit", "network element", "node", "function", "unit", "section", "system", "network", "chip", "chip system", "entity", "subject", etc., may be used interchangeably.

In some embodiments, terms such as "network" may be interpreted as devices (e.g., access network devices, core network devices, etc.) included in a network.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc., may be used interchangeably.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc., may be used interchangeably.

In some embodiments, the access network device, the core network device, or the network device may be replaced with a terminal. For example, the embodiments of the present disclosure may also be applied to a structure which replaces the communication between the access network device, core network device, or network device and the terminal with the communication between a plurality of terminals (for example, device-to-device (D2D), vehicle-to-everything (V2X), etc.). In this case, the terminal may have all or part of the functions of the access network device. In addition, terms such as "uplink" and "downlink" may also be replaced by terms corresponding to the communication between the terminals (for example, "side"). For example, uplink channel, downlink channel, etc. may be replaced by side channel, and uplink, downlink, etc. may be replaced by sidelink.

In some embodiments, the terminal may be replaced by the access network device, the core network device, or the network device. In this case, the access network device, the core network device, or the network device may have all or part of the functions of the terminal.

In some embodiments, obtaining data, information, etc., may comply with the laws and regulations of the country where the obtainment takes place.

In some embodiments, data, information, etc., may be obtained with a user's consent.

In addition, each element, each row, or each column in tables of the embodiments of the present disclosure may be implemented as an independent embodiment, and any combination of any elements, any rows, or any columns may also be implemented as an independent embodiment.

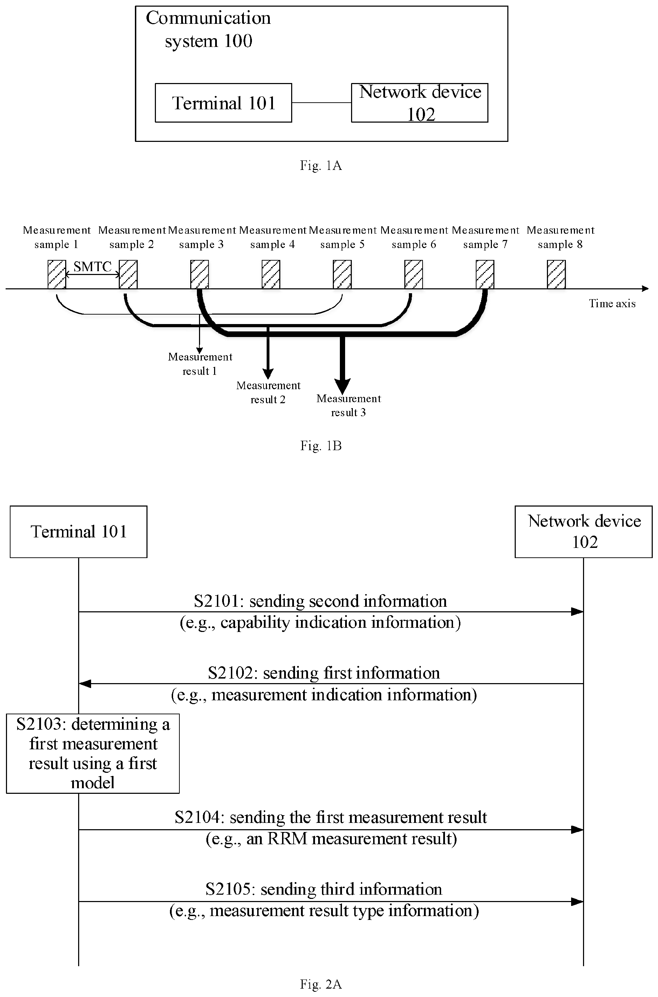

Fig. 1A is a schematic diagram of an architecture of a communication system according to an embodiment of the present disclosure. As shown in Fig. 1A, a communication system 100 includes a terminal 101 and a network device 102. Optionally, the network device 102 may include one or more of: an access network device and a core network device.

In some embodiments, the terminal 101 may include at least one of, for example, a mobile phone, a wearable device, an Internet of Things device, a vehicle with a communication function, a smart vehicle, a tablet computer (Pad), a computer with wireless transmitting and receiving functions, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited to this.

In some embodiments, the access network device is, for example, a node or device that connects a terminal to a wireless network. The access network device may include at least one of: an evolved node B (eNB) in a 5G communication system, a next-generation evolved node B (ng-eNB), a next-generation node B (gNB), a node B (NB), a home node B (HNB), a home evolved node B (HeNB), a wireless backhaul device, a radio network controller (RNC), a base station controller (BSC), a base transceiver station (BTS), a baseband unit (BBU), a mobile switching center, a base station in a 6G communication system, an Open RAN, a cloud RAN, a base station in other communication systems, and an access node in a wireless fidelity (WiFi) system, but is not limited to this.

In some embodiments, the technical solutions of the present disclosure may be applied to an open RAN architecture. In this case, interfaces between the access network devices or within the access network devices involved in the embodiments of the present disclosure may become internal interfaces of the Open RAN, and processes and information interactions between these internal interfaces may be implemented through software or programs.

In some embodiments, the access network device may include a central unit (CU) and a distributed unit (DU). The CU may also be referred to as a control unit. Protocol layers of the access network device may be split by using the CU-DU structure. Functions of some protocol layers are placed in the CU for centralized control; functions of the remaining part or all of the protocol layers are distributed in the DU, and the CU centrally controls the DU, but the present disclosure is not limited to this.

In some embodiments, the core network device may be a device, including a first network element, a second network element, etc., or may be a plurality of devices or a device group, including all or part of a first network element, a second network element, etc. The network element may be virtual or physical. The core network includes, for example, at least one of an evolved packet core (EPC), a 5G core network (5GCN), and a next generation core (NGC).

It may be understood that the communication system described in the embodiments of the present disclosure is for more clearly explaining the technical scheme of the embodiments of the present disclosure, and does not constitute a limitation on the technical scheme proposed in the embodiments of the present disclosure. It is known by those ordinary skilled in the related art that with the evolution of the system architecture and the emergence of new business scenarios, the technical scheme proposed in the embodiments of the present disclosure is also applicable to similar technical problems.

The following embodiments of the present disclosure may be applied to the communication system 100 shown in Fig. 1, or some entities thereof, but the present disclosure is not limited to this. Each entity shown in Fig. 1 is an example. The communication system may include all or part of the entities in Fig. 1, and other entities other than Fig. 1. The number and form of each entity are arbitrary, and each entity may be physical or virtual. The connection relationship between entities is an example. The entities may be disconnected or connected, and the connection thereof may be of any form, for example, may be direct connection or indirect connection, or may be wired connection or wireless connection.

The embodiments of the present disclosure may be applied to long-term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New radio access (NX), Future generation radio access (FX), Global System for Mobile Communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, machine-to-machine (M2M) system, Internet of Things (IoT) system, Vehicle-to-Everything (V2X) system, systems using other communication methods, next generation systems based on them, etc. In addition, multiple systems may also be combined (for example, the combination of LTE or LTE-A and 5G) for application.

In some embodiments, an artificial intelligence (AI) model or machine learning (ML) model prediction is introduced to simplify the process of some scenarios and improve the performance. One typical scenario is a mobile radio resource management (RRM) measurement scenario. According to the RRM measurement requirements, the terminal needs to average five measurement samples to obtain a measurement result that meets the accuracy requirements.

In some embodiments, as shown in Fig. 1B, one rectangle on a time axis represents one measurement sample, such as measurement sample 1 to measurement sample 8, and the time between two rectangles may be one measurement window, that is, one measurement occasion occurs each time a duration corresponding to one measurement window elapses, and the terminal may perform measurement at the measurement occasion to obtain a measurement sample corresponding to the measurement occasion. Optionally, the measurement window may be, for example, an SSB-based RRM measurement timing configuration (SMTC) window, and the duration of one SMTC window may be 20ms. As shown in Fig. 1B, the terminal may perform measurement to obtain one measurement sample at every measurement occasion, and the terminal may obtain a measurement result based on every five consecutive measurement samples, such as measurement result 1, measurement result 2 and measurement result 3. In some embodiments, based on the AL/ML model, an actual measurement result of the current measurement samples of the terminal is used to predict the measurement result, thus reducing the number of actually measured measurement samples, shortening the measurement delay and reducing the power consumption of UE.

Fig. 2A is an interactive schematic diagram of a measurement method according to an embodiment of the present disclosure. As shown in Fig. 2A, an embodiment of the present disclosure relates to a measurement method, which is performed by a communication system, and includes the following steps.

In step S2101, a terminal sends second information.

In some embodiments, the second information indicates a capability of the terminal. Optionally, the capability may be a measurement capability of the terminal. Optionally, the second information indicates that the terminal has a capability to determine a first measurement result using a first model. Optionally, the second information indicates whether the terminal has a capability to determine a first measurement result using a first model. For example, the second information may include a bit whose value may be used to indicate whether the terminal has the capability to determine the first measurement result using the first model. For example, when the value of the bit is "1", the second information indicates that the terminal has the capability to determine the first measurement result using the first model, and when the value of the bit is "0", the second information indicates that the terminal does not have the capability to determine the first measurement result using the first model.

In some embodiments, the second information may be used for a network device to determine whether to send first information to the terminal. For example, when the second information indicates that the terminal has the capability to determine the first measurement result using the first model, the network device may determine to send the first information to the terminal based on the second information; and when the second information indicates that the terminal does not have the capability to determine the first measurement result using the first model, the network device may determine not to send the first information to the terminal based on the second information.

In some embodiments, the second information may also include state information of the terminal, such as power information and load information of the terminal. Optionally, the network device may determine whether to send the first information to the terminal according to the state information of the terminal. For example, when the power information included in the second information indicates that a power of the terminal is lower than a power threshold, the network device may determine to send the first information to the terminal based on the second information.

In some embodiments, the network device receives the second information. In some embodiments, the name of the first information is not limited, and it is, for example, "terminal capability information", "capability indication information", etc.

In step S2102, a network device sends first information.

In some embodiments, the first information is used to indicate the terminal to determine the first measurement result using the first model. Optionally, the first information may be sent by the network device when the network device determines that the second information is received. Optionally, the first information may be sent by the network device when the network device receives the second information, and the second information indicates that the terminal has the capability to determine the first measurement result using the first model.

In some embodiments, the network device sends the first information in response to the second information. Optionally, the network device sends the first information in case of receiving the second information. Optionally, the network device sends the first information when receiving the second information.

In some embodiments, the terminal receives the first information. Optionally, the terminal determines whether to use the first model to determine the first measurement result according to its own capability. For example, when the terminal does not have the capability to use the first model to determine the first measurement result, it will not use the first model to determine the first measurement result; and when the terminal has the capability to use the first model to determine the first measurement result, it will use the first model to determine the first measurement result.

In some embodiments, the name of the first information is not limited, and it is, for example, "measurement mode indication", "measurement indication information", "indication information", etc.

In step S2103, the terminal determines a first measurement result using a first model.

In some embodiments, the first model may be a pre-trained artificial intelligence (AI) model or machine learning (ML) model. Optionally, the first model may be pre-deployed in the terminal, for example, prestored in a storage medium of the terminal. Optionally, the first model may be trained in the terminal. For example, an untrained first model may be deployed in the terminal, and the terminal may train the first model based on collected historical data to obtain the trained first model. Optionally, the first model may be trained in the network device and sent to the terminal by the network device. Optionally, the first model may be, for example, an AI model or an ML model or an intelligent model. The embodiments of the present disclosure do not limit the training mode, training device and name of the first model.

In some embodiments, the terminal determines the first measurement result using the first model according to a first measurement sample. Optionally, the first measurement sample is a measurement sample actually measured by the terminal.

In some embodiments, the first model may make predictions based on input parameters. Optionally, the input parameters may be pre-configured. For example, the input parameters may include the first measurement sample, and one or more of: a moving direction and a moving speed of the terminal, and position information of a target cell, etc. Optionally, output parameters of the first model may include the first measurement result or a second measurement sample.

In some embodiments, the first measurement result may be a measurement result corresponding to N measurement occasions. Without using the first model, the terminal may perform measurement and obtain one measurement sample at each measurement occasion. The value of N may be pre-agreed by protocols or indicated by an upper layer of the terminal or the network device, for example, may be equal to 5. The measurement window between two measurement occasions may be, for example, the SSB-based RRM measurement timing configuration (SMTC) window, and the corresponding duration of this window may be equal to 20ms, for example.

Optionally, when the terminal uses the first model, a numeric count of the first measurement samples measured by the terminal at the N measurement occasions may be less than N. For example, the terminal may actually measure the corresponding measurement samples at only three measurement occasions of five consecutive measurement occasions, that is, only three first measurement samples are measured. Optionally, the terminal may determine the first measurement result corresponding to the five measurement occasions using the first model based on the three first measurement samples.

Specifically, the way for the terminal to determine the first measurement result using the first model may include at least one of the following way 1 and way 2.

Way 1: in some embodiments, determining the first measurement result using the first model according to the first measurement sample includes determining the first measurement result using the first model according to the first measurement sample whose numeric count is a second numeric count.

Optionally, the terminal may input the first measurement samples and/or other input parameters into the first model to directly obtain the first measurement result. Optionally, the terminal may only actually perform measurement to obtain the first measurement results whose numeric count is the second numeric count. The other input parameters are not limited in the embodiments of the present disclosure.

Optionally, the terminal inputs consecutive first measurement results whose numeric count is the second numeric count and a second parameter corresponding to the first model into the first model to obtain the first measurement result output by the first model.

Optionally, the second numeric count is a numeric count of measurement samples actually measured within a duration corresponding to N measurement occasions before a current moment. Optionally, the second numeric count is smaller than the first numeric count. Optionally, the first numeric count is a numeric count of measurement samples required by the terminal to determine the first measurement result without using the first model. Optionally, the first numeric count is equal to N.

It should be noted that the second parameter may be any parameter or information designated by those skilled in the art, and is not limited by the embodiments of the present disclosure. For example, the second parameter may include, for example, at least one of: a moving direction in a first duration; a moving speed in the first duration; and position information of a target cell in the first duration. Optionally, the first duration may be equal to the duration corresponding to N-1 measurement windows.

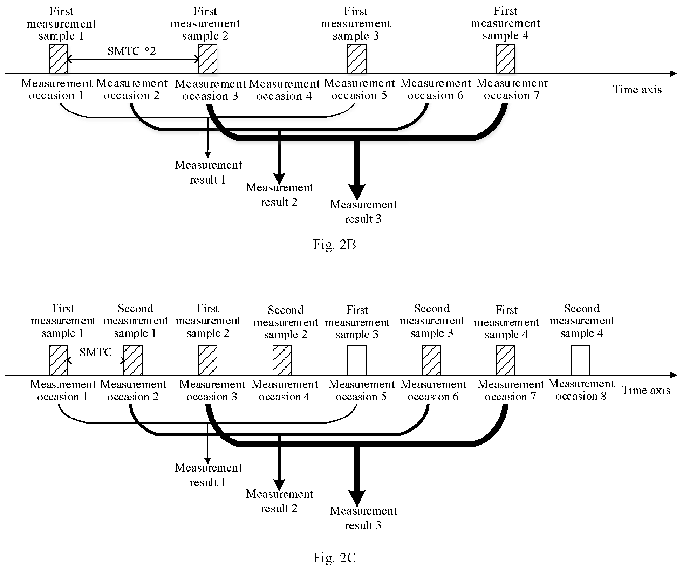

For example, as shown in Fig. 2B, one rectangle on a time axis represents one measurement sample. In this example, the terminal may perform measurement at an interval of one measurement occasion to obtain first measurement sample 1 to first measurement sample 4, so that the duration between each two adjacent measurement samples is equal to 2 SMTC windows. Referring to Fig. 2B, the terminal does not need to perform measurement at measurement occasions 2, 4 and 6, but only performs measurement at measurement occasions 1, 3, 5 and 7.

Further, as shown in Fig. 2B, five consecutive measurement occasions may correspond to two or three first measurement samples, for example, measurement occasion 1 to measurement occasion 5 correspond to first measurement sample 1 to first measurement sample 3, while measurement occasion 2 to measurement occasion 6 only correspond to first measurement sample 2 and first measurement sample 3.

When the terminal determines that measurement occasion 5 is reached, the terminal may input first measurement sample 1 to first measurement sample 3 into the first model to obtain measurement result 1 corresponding to measurement occasion 1 to measurement occasion 5. When the terminal determines measurement occasion 6 is reached, the terminal may input first measurement sample 2 to first measurement sample 3 into the first model to obtain measurement result 2 corresponding to measurement occasion 2 to measurement occasion 6. Further, when the terminal determines that measurement occasion 7 is reached, the terminal may also input first measurement sample 2 to first measurement sample 4 into the first model to obtain measurement result 3 corresponding to measurement occasion 3 to measurement occasion 7. In this way, the terminal does not need to actually perform measurement at every measurement occasion, thus effectively reducing the power consumption of the terminal.

Optionally, by adopting way 1, the input parameters of the first model may include at least one of: the measurement samples actually measured at the five measurement occasions; the moving direction in the first duration corresponding to the five measurement occasions; the moving speed in the first duration; and the position information of the target cell in the first duration. The output parameters of the first model may include the measurement result corresponding to the above five measurement occasions. For example, taking the five measurement occasions from measurement occasion 1 to measurement occasion 5 as an example, the first duration may be a period of time from the moment corresponding to measurement occasion 1 to the moment corresponding to measurement occasion 5, that is, the duration corresponding to 5-1 measurement windows before measurement occasion 5.

It may be understood that the first model may learn the potential mapping relationship between the input parameters and the output parameters through training, so that the first model may obtain the first measurement result by means of prediction according to limited information, that is, the measurement result may be obtained through the measurement sample whose numeric count is less than the first numeric count, and thus the terminal does not need to measure the first measurement sample at every measurement occasion.

Way 2: in some embodiments, determining the first measurement result using the first model according to the first measurement sample includes determining the second measurement sample using the first model according to the first measurement sample; and determining the first measurement result according to the first measurement sample and the second measurement sample.

Optionally, the terminal may input the first measurement sample and a first parameter corresponding to the first model into the first model to obtain the second measurement sample output by the first model. Optionally, the terminal determines the first measurement result according to an average value of the first measurement sample and the second measurement sample. Other input parameters are not limited in the embodiments of the present disclosure.

Optionally, a sum of a numeric count of the first measurement sample and a numeric count of the second measurement sample is equal to a first numeric count. Optionally, the first numeric count is a numeric count of measurement samples required by the terminal to determine the first measurement result without using the first model. Optionally, the value of the first numeric count may be equal to N, for example, equal to 5.

For example, if the first numeric count is equal to 5, the terminal may only measure three first measurement samples and input the three first measurement samples into the first model to obtain two second measurement samples, so that the terminal may determine the first measurement result based on the three first measurement samples and two second measurement samples.

It should be noted that the above first parameter may be any parameter or information designated by those skilled in the art, and is not limited by the embodiments of the present disclosure. For example, the first parameter may include, for example, at least one of: a moving direction in a second duration; a moving speed in the second duration; and position information of a target cell in the second duration. Optionally, the first duration may be the duration corresponding to one measurement window before the measurement occasion corresponding to the current moment.

For example, as shown in Fig. 2C, one rectangle on a time axis represents one measurement sample. In this example, the terminal may actually perform measurement at an interval of one measurement occasion to obtain first measurement sample 1 to first measurement sample 4, and determine the second measurement sample corresponding to the measurement occasion using the first model at the measurement occasion without measurement, that is, second measurement sample 1 to second measurement sample 4 in Fig. 2C. In this way, the duration between each two adjacent measurement samples may be equal to one SMTC window.

Further, as shown in Fig. 2C, for measurement occasion 1 to measurement occasion 5, the terminal may determine corresponding measurement result 1 according to first measurement sample 1, first measurement sample 2, first measurement sample 3, second measurement sample 1, and second measurement sample 2. For example, when the terminal determines that measurement occasion 5 is reached, the terminal may determine measurement result 1 according to the measurement samples corresponding to measurement occasion 1 to measurement occasion 5. Further, the terminal may determine measurement result 2 corresponding to measurement occasion 2 to measurement occasion 6 at measurement occasion 6, the terminal may determine measurement result 3 corresponding to measurement occasion 3 to measurement occasion 7 at measurement occasion 7, and the terminal may determine a measurement result corresponding to measurement occasion 4 to measurement occasion 8 at measurement occasion 8, which is not repeated here. In this way, the terminal does not need to actually perform measurement at every measurement occasion, thus effectively reducing the power consumption of the terminal.

Optionally, by adopting way 2, the input parameters of the first model may include at least one of: the measurement sample actually measured at the first measurement occasion; the moving direction in the second duration; the moving speed in the second duration; and the position information of the target cell in the second duration. The output parameters of the first model may include the measurement sample corresponding to the second measurement occasion. The second measurement occasion may be the measurement occasion corresponding to the current moment, the first measurement occasion may be the measurement occasion immediately before the second measurement occasion, and the second duration may be the duration between the first measurement occasion and the second measurement occasion. For example, referring to Fig. 2C, taking an example that the measurement occasion corresponding to the current moment is measurement occasion 6, the first measurement occasion may be measurement occasion 5, and the terminal may input first measurement sample 3 actually measured at measurement occasion 5, and the information such as the moving direction and moving speed of the terminal and the position information of the target cell between measurement occasion 5 and measurement occasion 6 into the first model, so as to obtain the measurement sample corresponding to the current moment output by the first model, that is, second measurement sample 3.

Optionally, the first measurement occasion in the above optional embodiments may include X measurement occasions before the second measurement occasion, and the second duration may be the duration corresponding to 2X measurement windows before the second measurement occasion. X may be a positive integer greater than or equal to 1, and the specific value of X is not limited in the embodiments of the present disclosure. For example, taking an example that the measurement occasion corresponding to the current moment is measurement occasion 6, and X is equal to 2, the first measurement occasion may include measurement occasion 3 and measurement occasion 5, and the second duration may be the duration from measurement occasion 3 to measurement occasion 6. The terminal may input first measurement sample 2, first measurement sample 3, and the information such as the moving direction and moving speed of the terminal and the position information of the target cell from measurement occasion 3 to measurement occasion 6 into the first model, to obtain second measurement sample 3 output by the first model.

In some embodiments, the first measurement result is used for radio resource management. Optionally, the first measurement result may indicate a mobility event triggered by the terminal. Optionally, the network device or the terminal itself may perform radio resource management according to the mobility event indicated by the first measurement result. Optionally, the first measurement result may be, for example, an RRM measurement result. Optionally, the first measurement result may be an SSB-based RRM measurement result.

In some embodiments, the first measurement sample is measured according to a synchronization signal and physical broadcast channel block (SSB). Optionally, the first measurement sample may be measured according to a channel state information reference signal (CSI-RS).

In some embodiments, the first measurement result may include at least one of: a measurement result in an idle state; a measurement result in an inactive state; or a measurement result in a connected state.

Optionally, the measurement result in the idle state and the measurement result in the inactive state may include cell search and neighbor cell measurement such as Cell_selection_and_reselection_quality_measurement, and for example, may include intra-frequency measurement, inter-frequency measurement and inter-RAT measurement. Optionally, the measurement result in the connected state may include cell identification, SSB index detection and neighbor cell measurement, and for example, may include intra-frequency measurement, inter-frequency measurement and inter-RAT measurement.

In some embodiments, determining the first measurement result using the first model according to the first measurement sample includes determining that a first condition is satisfied, and determining the first measurement result using the first model according to the first measurement sample.

Optionally, the first condition includes at least one of: first information being received, where the first information is sent by the network device and configured to indicate the terminal to determine the first measurement result using the first model; a measurement value of the first measurement sample being greater than or equal to a first measurement threshold; or a power of the terminal being less than or equal to a first power threshold.

Optionally, the first measurement threshold may be pre-configured based on a prediction accuracy of the first model. For example, when the measurement value of the first measurement sample is lower than the first measurement threshold, a confidence of a result predicted by the first model may be lower than a preset confidence threshold. Optionally, the first power threshold may be a threshold set by the user or a threshold set in advance, which is not limited in the embodiments of the present disclosure. For example, the user may set the first power threshold to 20%, and when the power of the terminal is lower than 20%, the first measurement result may be predicted using the first model, so as to decrease the numeric count of the measured first measurement samples to reduce the power consumption.

In some embodiments, before step S2103, the method may further include a step that the network device sends fourth information. Optionally, the fourth information indicates the first measurement threshold and/or the first power threshold. Optionally, the terminal receives the fourth information. Optionally, the terminal determines the first measurement threshold and/or the first power threshold according to the fourth information. Optionally, the first measurement threshold and/or the first power threshold are indicated by the network device through the fourth information. Optionally, the first measurement threshold and/or the first power threshold are used for the terminal 101 to determine whether to use the first model to determine the first measurement result.

In step S2104, the terminal sends the first measurement result.

In some embodiments, the first measurement result may be achieved based on the optional implementations in step S2103, and for example, may be determined using the first model according to the first measurement sample, which will not be repeated here. In some embodiments, the network device receives the first measurement result.

In some embodiments, the terminal may send the first measurement result according to a preset period. Optionally, the period may be equal to one or more measurement windows. For example, when the period is equal to one measurement window, the terminal may determine one first measurement result at each measurement occasion and directly send the first measurement result to the network device, that is, the terminal may send the determined first measurement results to the network device in sequence. Alternatively, when the period is equal to a plurality of measurement windows, the terminal may determine one first measurement result at each measurement occasion, then obtain a plurality of first measurement results in one period, and send the plurality of first measurement results to the network device, that is, the terminal may send the plurality of first measurement results determined in a period of time to the network device together.

In some embodiments, the terminal may send the first measurement result in a case that it is determined that a first event is triggered. For example, when the terminal determines a plurality of first measurement results using the first model before the first event is triggered, it may send the plurality of first measurement results to the network device after the first event is triggered. For another example, when all the first measurement results of the terminal before the first event is triggered have been sent to the network device, the first measurement result determined at the next measurement occasion may be sent to the network device, or M first measurement results before the first event is triggered may be sent to the network device again, where M is a positive integer.

In step S2105, the terminal sends third information.

In some embodiments, the third information indicates the first measurement result is determined using the first model. Optionally, the third information indicates whether the measurement result sent by the terminal is determined using the first model. For example, the third information may include one bit whose value may be used to indicate whether the measurement result sent by the terminal is determined using the first model. For example, when the value of the bit is "1", the second information indicates that the measurement result sent by the terminal is determined using the first model, and when the value of the bit is "0", the second information indicates that the measurement result sent by the terminal is not determined using the first model.

In some embodiments, the third information may be, for example, "measurement mode report" and "measurement result type information", and the name of the third information is not limited in the embodiments of the present disclosure.

In some embodiments, the names of information and the like are not limited to the names recorded in the embodiments, "information", "message", "signal", "signaling", "report", "configuration", "indication", "instruction", "command", "channel", "parameter", "domain", "field", "symbol", "codebook", "codeword", "codepoint", "bit", "data", "program", and "chip" may be used interchangeably.

In some embodiments, terms such as "up", "uplink", "physical uplink" and the like may be used interchangeably, and terms such as "down", "downlink", "physical downlink" and the like may be used interchangeably, and terms such as "side", "sidelink", "side communication", "sidelink communication", "direct", "direct link", "direct communication", "direct link communication" and the like may be used interchangeably.

In some embodiments, terms such as "downlink control information (DCI)", "downlink (DL) assignment", "DL DCI", "uplink (UL) grant", "UL DCI" and the like may be used interchangeably.

In some embodiments, terms such as "physical downlink shared channel (PDSCH)", "DL data" and the like may be used interchangeably, and terms such as "physical uplink shared channel (PUSCH)", "UL data" and the like may be used interchangeably.

In some embodiments, terms such as "synchronization signal (SS)", "synchronization signal block (SSB)", "reference signal (RS)", "pilot", "pilot signal" and the like may be used interchangeably.

In some embodiments, terms such as "moment", "time point", "time", "time position" and the like may be used interchangeably, and terms such as "duration", "time period", "time window", "window", "time" and the like may be used interchangeably.

In some embodiments, terms such as "frame", "radio frame", "subframe", "slot", "sub-slot", "mini-slot", "symbol", "transmission time interval (TTI)" and the like may be used interchangeably.

In some embodiments, terms such as "acquire", "obtain", "get", "receive", "transmit", "bidirectionally transmit" and "transmit and/or receive" may be used interchangeably, and may be interpreted as receiving from other entities, obtaining from protocols, obtaining from higher layers, obtaining via processing by itself, independent realization and so on.

In some embodiments, terms such as "send", "emit", "report", "distribute", "transmit", "bidirectionally transmit", "transmit and/or receive" and the like may be used interchangeably.

In some embodiments, terms such as "certain", "preset", "predetermined", "set", "indicated", "particular", "arbitrary", "first" and the like may be used interchangeably, and "certain A", "preset A", "predetermined A", "set A", "indicated A", "particular A", "arbitrary A", "first A" and the like may be interpreted as an A pre-specified in a protocol, an A obtained through setting, configuration or indication, or a particular A, a certain A, an arbitrary A or a first A, which is not limited here.

In some embodiments, the determination or judgment may be made by a value (0 or 1) represented by one bit, by a true or false value (boolean) represented as true or false, or a numerical comparison (for example, comparison with a predetermined value), which it is not limited here.

In some embodiments, "not expecting to receive" may be interpreted as not receiving on time domain resources and/or frequency domain resources, or may also be interpreted as not performing subsequent processing on data and the like after receiving it; and "not expecting to send" may be interpreted as not sending, or may also be interpreted as sending but not expecting a receiver to respond to the sent content.

The measurement method according to the embodiments of the present disclosure may include at least one of step S2101 to step S2105. For example, step S2102 may be implemented as an independent embodiment, step S2103 may be implemented as an independent embodiment, step S2105 may be implemented as an independent embodiment, step S2101 and step S2102 may be implemented as an independent embodiment, and step S2103 to step S2104 may be implemented as an independent embodiment, which is not limited here.

In some embodiments, step S2104 and step S2105 may be reversed or executed at the same time.

In some embodiments, step S2101 to step S2102 and step S2104 to step S2105 are optional, and one or more of these steps may be omitted or replaced in different embodiments.

In some embodiments, step S2101 and step S2103 to step S2105 are optional, and one or more of these steps may be omitted or replaced in different embodiments.

In some embodiments, reference may be made to other optional implementations described before or after the description corresponding to Fig. 2A.

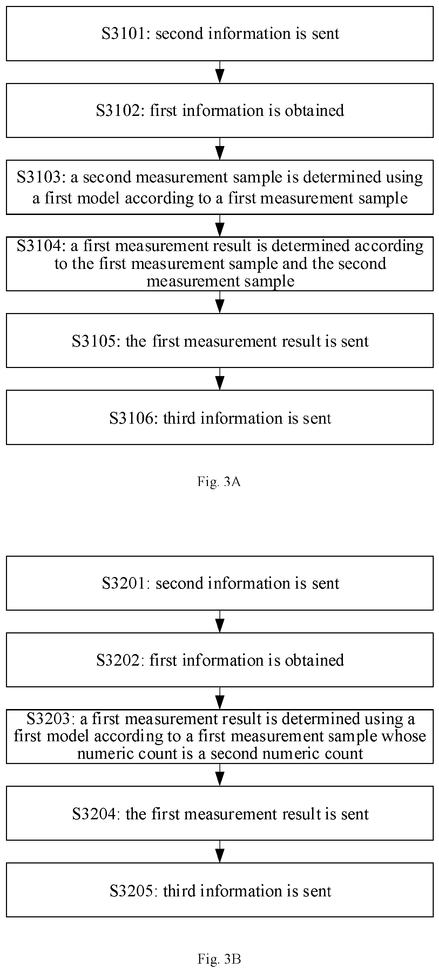

Fig. 3A is a flowchart of a measurement method according to an embodiment of the present disclosure. As shown in Fig. 3A, an embodiment of the present disclosure relates to a measurement method, which is performed by a terminal, and includes the following steps.

In step S3101, second information is sent.

For optional implementations of step S3101, reference may be made to the optional implementations of step S2101 in Fig. 2A and other related parts of the embodiment involved in Fig. 2A, which are not repeated here.

In some embodiments, the terminal sends the second information to a network device, but the present disclosure is not limited to this, and the terminal may also send the second information to other entities.

Optionally, the second information is used for the network device to determine whether the terminal has a capability to determine a first measurement result using a first model.

In step S3102, first information is obtained.

For optional implementations of step S3102, reference may be made to the optional implementations of step S2101 in Fig. 2A and other related parts in the embodiment involved in Fig. 2A, which are not repeated here.

In some embodiments, the terminal receives the first information sent by the network device, but the present disclosure is not limited to this, and the terminal may also receive the first information sent by other entities.

In some embodiments, the terminal obtains the first information specified by a protocol.

In some embodiments, the terminal obtains the first information from an upper layer.

In some embodiments, the terminal performs processing to obtain the first information.

In some embodiments, step S3102 is omitted, and the terminal autonomously realizes the function indicated by the first information, or the above function is default.

In step S3103, a second measurement sample is determined using a first model according to a first measurement sample.

For optional implementations of step S3103, reference may be made to the optional implementations of step S2103 in Fig. 2A and other related parts of the embodiment involved in Fig. 2A, such as the optional implementations of way 2 in step S2103 in Fig. 2A, which are not repeated here.

In step S3104, a first measurement result is determined according to the first measurement sample and the second measurement sample.

For optional implementations of step S3104, reference may be made to the optional implementations of step S2103 in Fig. 2A and other related parts of the embodiment involved in Fig. 2A, such as the optional implementations of way 2 in step S2103 in Fig. 2A, which are not repeated here.

In step S3105, the first measurement result is sent.

For optional implementations of step S3105, reference may be made to the optional implementations of step S2104 in Fig. 2A and other related parts in the embodiment involved in Fig. 2A, which are not repeated here.

In some embodiments, the terminal sends the first measurement result to the network device, but the present disclosure is not limited to this, and the terminal may also send the first measurement result to other entities. Optionally, the first measurement result is used for radio resource management.

In step S3106, third information is sent.

For optional implementations of step S3106, reference may be made to the optional implementations of step S2105 in Fig. 2A and other related parts in the embodiment involved in Fig. 2A, which are not repeated here.

In some embodiments, the terminal sends the third information to the network device, but the present disclosure is not limited to this, and the terminal may also send the third information to other entities. Optionally, the third information indicates that the first measurement result is determined using the first model.

The measurement method according to the embodiment of the present disclosure may include at least one of step S3101 to step S3106. For example, step S3101 may be implemented as an independent embodiment, step S3103 may be implemented as an independent embodiment, step S3104 may be implemented as an independent embodiment, step S3101 and step S3102 may be implemented as an independent embodiment, and step S3103 to step S3104 may be implemented as an independent embodiment, but the present disclosure is not limited to this.

In some embodiments, step S3105 and step S3106 may be reversed or executed simultaneously.

In some embodiments, step S3101 to step S3102 and step S3105 to step S3106 are optional, and one or more of these steps may be omitted or replaced in different embodiments.

In some embodiments, step S3102 to step S3106 are optional, and one or more of these steps may be omitted or replaced in different embodiments.

Fig. 3B is a flowchart of a measurement method according to an embodiment of the present disclosure. As shown in Fig. 3B, an embodiment of the present disclosure relates to a measurement method, which is performed by a terminal, and includes the following steps.

In step S3201, second information is sent.

For optional implementations of step S3201, reference may be made to the optional implementations of step S2101 of Fig. 2A and step S3101 of Fig. 3A, and other related parts of the embodiments involved in Fig. 2A and Fig. 3A, which are not repeated here.

In step S3202, first information is obtained.

For optional implementations of step S3202, reference may be made to the optional implementations of step S2101 in Fig. 2A and step S3102 in Fig. 3A, and other related parts of the embodiments involved in Fig. 2A and Fig. 3A, which are not repeated here.

In step S3203, a first measurement result is determined using a first model according to a first measurement sample whose numeric count is a second numeric count.

For optional implementations of step S3203, reference may be made to the optional implementations of step S2103 in Fig. 2A, and other related parts of the embodiments involved in Fig. 2A and Fig. 3A, such as the optional implementations of way 1 in step S2103 in Fig. 2A, which are not be repeated here.

In step S3204, the first measurement result is sent.

For optional implementations of step S3204, reference may be made to the optional implementations of step S2104 of Fig. 2A and step S3105 of Fig. 3A, and other related parts of the embodiments involved in Fig. 2A and Fig. 3A, which are not repeated here.

In step S3205, third information is sent.

For optional implementations of step S3205, reference may be made to the optional implementations of step S2105 of Fig. 2A and step S3106 of Fig. 3A, and other related parts of the embodiments involved in Fig. 2A and Fig. 3A, which are not repeated here.

The measurement method according to the embodiments of the present disclosure may include at least one of step S3101 to step S3105. For example, step S3102 may be implemented as an independent embodiment, step S3103 may be implemented as an independent embodiment, step S3105 may be implemented as an independent embodiment, step S3101 and step S3102 may be implemented as an independent embodiment, and step S3103 to step S3104 may be implemented as an independent embodiments, but the present disclosure is not limited to this.

In some embodiments, step S3104 and step S3105 may be reversed or executed at the same time.

In some embodiments, step S3101 to step S3102 and step S3104 to step S3105 are optional, and one or more of these steps may be omitted or replaced in different embodiments.

In some embodiments, step S3101 and step S3103 to step S3105 are optional, and one or more of these steps may be omitted or replaced in different embodiments.

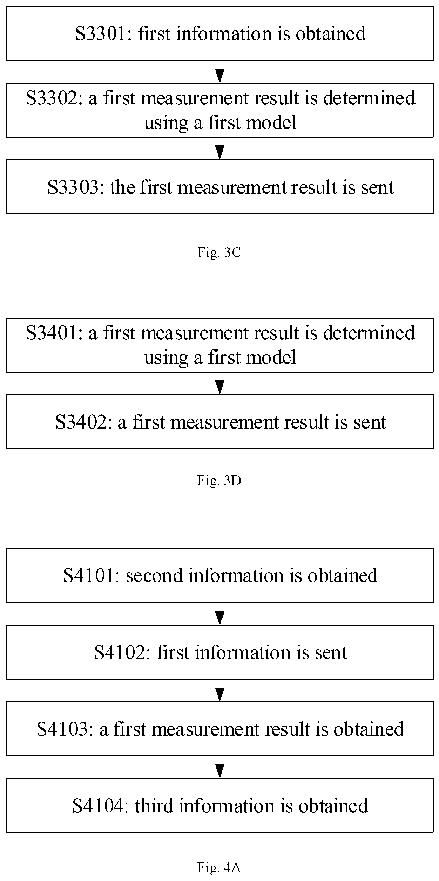

Fig. 3C is a flowchart of a measurement method according to an embodiment of the present disclosure. As shown in Fig. 3C, an embodiment of the present disclosure relates to a measurement method, which includes the following steps.

In step S3301, first information is obtained.

For optional implementations of step S3301, reference may be made to the optional implementations of step S2101 of Fig. 2A, step S3102 of Fig. 3A, step S3202 of Fig. 3B, and other related parts of the embodiments involved in Fig. 2A and Fig. 3A, which are not repeated here.

In step S3302, a first measurement result is determined using a first model.

For optional implementations of step S3302, reference may be made to the optional implementations of step S2103 in Fig. 2A, step S3103 to step S3104 in Fig. 3A, step S3203 in Fig. 3B, and other related parts of the embodiments involved in Fig. 2A, Fig. 3A and Fig. 3B, which are not repeated here.

In step S3303, the first measurement result is sent.

For optional implementations of step S3303, reference may be made to the optional implementations of step S2104 of Fig. 2A, step S3105 of Fig. 3A, step S3204 of Fig. 3B, and other related parts of the embodiments involved in Fig. 2A, Fig. 3A and Fig. 3B, which are not repeated here.

The measurement method according to the embodiments of the present disclosure may include at least one of step S3301 to step S3303. For example, step S3302 may be implemented as an independent embodiment, step S3303 may be implemented as an independent embodiment, step S3301 and step S3302 may be implemented as an independent embodiment, and step S3302 to step S3303 may be implemented as an independent embodiments, but the present disclosure is not limited to this.

In some embodiments, step S3301 and step S3303 are optional, and one or more of these steps may be omitted or replaced in different embodiments.

In some embodiments, step S3302 to step S3303 are optional, and one or more of these steps may be omitted or replaced in different embodiments.

In some embodiments, step S3301 to step S3303 may be combined with step S3101 in Fig. 3A, step S3301 to step S3303 may be combined with step S3105 in Fig. 3A, step S3301 and step S3303 may be combined with step S3103 to step S3104 in Fig. 3A, and step S3301 and step S3303 may be combined with step S3203 in Fig. 3B.

Fig. 3D is a flowchart of a measurement method according to an embodiment of the present disclosure. As shown in Fig. 3D, an embodiment of the present disclosure relates to a measurement method, which is performed by a terminal, and includes the following steps.

In step S3401, a first measurement result is determined using a first model.

For optional implementations of step S3401, reference may be made to the optional implementations of step S2103 in Fig. 2A, step S3103 to step S3104 in Fig. 3A, step S3203 in Fig. 3B and step S3302 in Fig. 3C, and other related parts of the embodiments involved in Fig. 2A, Fig. 3A, Fig. 3B and Fig. 3C, which are not repeated here.

In step S3402, a first measurement result is sent.

For optional implementations of step S3402, reference may be made to the optional implementations of step S2104 of Fig. 2A, step S3105 of Fig. 3A, step S3204 of Fig. 3B and step S3303 of Fig. 3C, and other related parts of the embodiments involved in Fig. 2A, Fig. 3A, Fig. 3B and Fig. 3C, which are not repeated here.

In some embodiments, the first measurement sample is a measurement sample actually measured by the terminal. Optionally, the first measurement result is used for radio resource management.

In some embodiments, the first measurement includes at least one of:
a measurement result in an idle state;
a measurement result in an inactive state; or
a measurement result in a connected state.

In some embodiments, determining the first measurement result using the first model according to the first measurement sample includes:
determining a second measurement sample using the first model according to the first measurement sample, where a sum of a numeric count of the first measurement sample and a numeric count of the second measurement sample is equal to a first numeric count, and the first numeric count is a numeric count of measurement samples required by the terminal to determine the first measurement result without using the first model; and
determining the first measurement result according to the first measurement sample and the second measurement sample.

In some embodiments, determining the first measurement result using the first model according to the first measurement sample includes:
determining the first measurement result using the first model according to the first measurement sample whose numeric count is a second numeric count, where the second numeric count is smaller than the first numeric count, and the first numeric count is a numeric count of measurement samples required by the terminal to determine the first measurement result without using the first model.

In some embodiments, before determining the first measurement result using the first model according to the first measurement sample, the method includes:
receiving first information configured to indicate the terminal to determine the first measurement result using the first model.

In some embodiments, before determining the first measurement result using the first model according to the first measurement sample, the method includes:
sending second information indicating that the terminal has a capability to determine the first measurement result using the first model; and
receiving first information, where the first information is sent by a network device in response to determining that the second information is received, and the first information is configured to indicate the terminal to determine the first measurement result using the first model.

In some embodiments, the method includes:
sending third information indicating that the first measurement result is determined using the first model.

In some embodiments, determining the first measurement result using the first model according to the first measurement sample includes:
determining that a first condition is satisfied, and determining the first measurement result using the first model according to the first measurement sample, where the first condition includes at least one of:
first information being received, where the first information is sent by a network device and configured to indicate the terminal to determine the first measurement result using the first model;
a measurement value of the first measurement sample being greater than or equal to a first measurement threshold; or
a power of the terminal being less than or equal to a first power threshold.

In some embodiments, the first measurement threshold and/or the first power threshold are indicated by the network device through fourth information.

In some embodiments, the first measurement sample is measured according to a synchronization signal block (SSB) and/or a channel state information reference signal (CSI-RS).

The measurement method according to the embodiments of the present disclosure may include at least one of step S3401 to step S3402. For example, step S3401 may be implemented as an independent embodiment, and step S3402 may be implemented as an independent embodiment.

In some embodiments, step S3402 is optional, and this step may be omitted or replaced in different embodiments.

In some embodiments, step S3401 is optional, and this step may be omitted or replaced in different embodiments.

In some embodiments, step S3401 may be combined with step S3101 to step S3102 and step S3105 to step S3106 of Fig. 3A, step S3401 may be combined with step S3201 to step S3202 and step S3204 to step S3205 of Fig. 3B, step S3401 to step S3402 may be combined with step S3101 and/or step S3102 of Fig. 3A, and step S3401 to step S3402 may be combined with step S3106 of Fig. 3A.

Fig. 4A is a flowchart of a measurement method according to an embodiment of the present disclosure. As shown in Fig. 4A, an embodiment of the present disclosure relates to a measurement method, which is performed by a network device, and includes the following step.

In step S4101, second information is obtained.

For optional implementations of step S4101, reference may be made to the optional implementations of step S2101 in Fig. 2A and other related parts of the embodiment involved in Fig. 2A, which are not repeated here.

In some embodiments, the network device receives the second information sent by a terminal, but the present disclosure is not limited to this, and the network device may also receive the second information sent by other entities.

In some embodiments, the network device obtains first information specified by a protocol.

In some embodiments, the network device obtains first information from an upper layer.

In some embodiments, the network device performs processing to obtain first information.

In some embodiments, step S4101 is omitted, and the network device autonomously realizes the function indicated by the second information, or the above function is default.

In step S4102, first information is sent.

For the optional implementations of step S4102, reference may be made to the optional implementations of step S2102 in Fig. 2A and other related parts of the embodiment involved in Fig. 2A, which are not repeated here.

In some embodiments, the network device sends the first information to the terminal, but the present disclosure is not limited to this, and the network device may also send the first information to other entities.

Optionally, the first information is used to indicate the terminal to determine the first measurement result using the first model. For its optional implementations, reference may be made to the optional implementations of step S2103 in Fig. 2A and other related parts in the embodiment involved in Fig. 2, which are not repeated here.

In step S4103, a first measurement result is obtained.

For optional implementations of step S4103, reference may be made to the optional implementations of step S2104 in Fig. 2A and other related parts of the embodiment involved in Fig. 2A, which are not repeated here.

In some embodiments, the network device receives the first measurement result sent by the terminal, but the present disclosure it is not limited to this, and the network device may also receive the first measurement result sent by other entities.

In some embodiments, the network device obtains the first measurement result specified by a protocol.

In some embodiments, the network device obtains the first measurement result from an upper layer.

In some embodiments, the network device performs processing to obtain the first measurement result.

In some embodiments, step S4103 is omitted, and the network device autonomously realizes the function indicated by the second information, or the above function is default.

In some embodiments, the first measurement result is determined by the terminal using the first model. For its optional implementations, reference may be made to the optional implementations of step S2103 in Fig. 2A and other related parts of the embodiment involved in Fig. 2, which are not repeated here.

In step S4104, third information is obtained.

For optional implementations of step S4104, reference may be made to the optional implementations of step S2105 in Fig. 2A and other related parts of the embodiment involved in Fig. 2A, which are not repeated here.

In some embodiments, the network device receives the third information sent by the terminal, but the present disclosure is not limited to this, and the network device may also receive the third information sent by other entities.

In some embodiments, the network device obtains the third information specified by a protocol.

In some embodiments, the network device obtains the third information from a upper layer.

In some embodiments, the network device performs processing to obtain the third information.

In some embodiments, step S4104 is omitted, and the network device autonomously realizes the function indicated by the second information, or the above function is default.

The measurement method according to the embodiments of the present disclosure may include at least one of step S4101 to step S4104. For example, step S4102 may be implemented as an independent embodiment, step S4103 may be implemented as an independent embodiment, step S4104 may be implemented as an independent embodiment, step S4101 and step S4102 may be implemented as an independent embodiment, and step S4103 to step S4104 may be implemented as an independent embodiment, but the present disclosure is not limited to this.

In some embodiments, step S4103 and step S4104 may be reversed or executed at the same time.

In some embodiments, step S4101 to step S4102 and step S4104 are optional, and one or more of these steps may be omitted or replaced in different embodiments.

In some embodiments, step S4101 and step S4103 to step S4104 are optional, and one or more of these steps may be omitted or replaced in different embodiments.

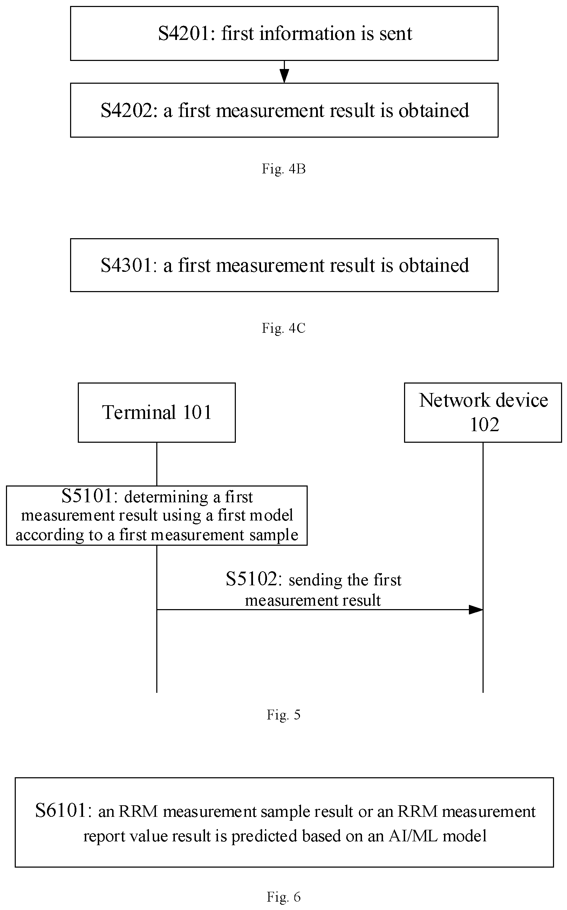

Fig. 4B is a flowchart of a measurement method according to an embodiment of the present disclosure. As shown in Fig. 4B, an embodiment of the present disclosure relates to a measurement method, which is performed by a network device, and includes the following steps.

In step S4201, first information is sent.

For optional implementations of step S4201, reference may be made to the optional implementations of step S2102 of Fig. 2A and step S4102 of Fig. 4A, and other related parts of the embodiments involved in Fig. 2A and Fig. 4A, which are not described here.

In step S4202, a first measurement result is obtained.

For optional implementations of step S4202, reference may be made to the optional implementations of step S2102 of Fig. 2A and step S4103 of Fig. 4A, and other related parts of the embodiments involved in Fig. 2A and Fig. 4A, which are not repeated here.

The measurement method according to the embodiments of the present disclosure may include at least one of step S4201 to step S4202. For example, step S4201 may be implemented as an independent embodiment, and step S4202 may be implemented as an independent embodiment.

In some embodiments, step S4201 is optional, and this step may be omitted or replaced in different embodiments.

In some embodiments, step S4202 is optional, and this step may be omitted or replaced in different embodiments.

Fig. 4C is a flowchart of a measurement method according to an embodiment of the present disclosure. As shown in Fig. 4C, an embodiment of the present disclosure relates to a measurement method, which is performed by a network device, and includes the following steps.

In step S4301, a first measurement result is obtained.

For optional implementations of step S4301, reference may be made to the optional implementations of step S2102 of Fig. 2A, step S4103 of Fig. 4A and step S4202 of Fig. 4B, and other related parts of the embodiments involved in Fig. 2A, Fig. 4A and Fig. 4B, which are not repeated here.

In some embodiments, the first measurement result is used for radio resource management. Optionally, the first measurement result is determined using a first model according to a first measurement sample. Optionally, the first measurement sample is a measurement sample actually measured by the terminal.

In some embodiments, the first measurement includes at least one of:
a measurement result in an idle state;
a measurement result in an inactive state; or
a measurement result in a connected state.

In some embodiments, the first measurement result is determined according to the first measurement sample and a second measurement sample, and the second measurement sample is determined according to the first measurement sample using the first model. A sum of a numeric count of the first measurement sample and a numeric count of the second measurement sample is equal to a first numeric count, and the first numeric count is a numeric count of measurement samples required by the terminal to determine the first measurement result without using the first model.

In some embodiments, the first measurement result is determined using the first model according to the first measurement sample whose numeric count is a second numeric count, the second numeric count is smaller than the first numeric count, and the first numeric count is a numeric count of measurement samples required by the terminal to determine the first measurement result without using the first model.

In some embodiments, the method includes:
sending first information, where the first information is configured to indicate the terminal to determine the first measurement result using the first model.

In some embodiments, the method includes:
receiving second information indicating that the terminal has a capability to determine the first measurement result using the first model; and
determining that the second information is received, and sending first information, where the first information is configured to indicate the terminal to determine the first measurement result using the first model.

In some embodiments, the method includes:
receiving third information indicating that the first measurement result is determined using the first model.

In some embodiments, the first measurement result is determined by the terminal using the first model when it is determined that a first condition is satisfied, and the first condition includes at least one of:
the terminal receiving the first information;
a measurement value of the first measurement sample being greater than or equal to a first measurement threshold; or
a power of the terminal being less than or equal to a first power threshold.

In some embodiments, the method includes:
sending fourth information indicating the first measurement threshold and/or the first power threshold, where the first measurement threshold and/or the first power threshold are used for the terminal to determine whether to determine the first measurement result using the first model.

In some embodiments, the first measurement sample is measured according to a synchronization signal block (SSB) and/or a channel state information reference signal (CSI-RS).

Fig. 5 is an interactive schematic diagram of a measurement method according to an embodiment of the present disclosure. As shown in Fig. 5, an embodiment of the present disclosure relates to a measurement method, which includes the following steps.

In step S5101, a terminal determines a first measurement result using a first model according to a first measurement sample.

For optional implementations of step S5101, reference may be made to the optional implementations of step S2103 of Fig. 2A, step S3103 to step S3104 of Fig. 3A, step S3203 of Fig. 3B, step S3302 of Fig. 3C and step S3401 of Fig. 3D, and other related parts of the embodiments involved in Fig. 2A, Fig. 3A, Fig. 3B, Fig. 3C, Fig. 3D/Fig. 4A, Fig. 4B and Fig. 4C, which are not repeated here.

In step S5102, the terminal sends the first measurement result to the network device.

For optional implementations of step S5101, reference may be made to the optional implementations of step S2104 of Fig. 2A, step S3105 of Fig. 3A, step S3204 of Fig. 3B, step S3303 of Fig. 3C and step S3402 of Fig. 3D, and other related parts of the embodiments involved in Fig. 2A, Fig. 3A, Fig. 3B, Fig. 3C, Fig. 3D/Fig. 4A, Fig. 4B and Fig. 4C, which are not repeated here.

Fig. 6A is a flowchart of a measurement method according to an embodiment of the present disclosure. As shown in Fig. 6A, an embodiment of the present disclosure relates to a measurement method, which is performed by a terminal, and includes the following steps.

In step S6101, an RRM measurement sample result or an RRM measurement report value result is predicted based on an AI/ML model.

In some embodiments, the AI/ML model performs prediction based on configured input parameters, where the input parameters may be a moving speed/direction of UE, an actual measurement value of the UE at a previous measurement sample occasion, position information of a target cell, and so on.

In some embodiments, RRM measurement includes at least the following measurement:
measurement in an idle state and measurement in an inactive state, including cell search and neighbor cell measurement (intra-frequency measurement, inter-frequency measurement and inter-RAT measurement); and
measurement in a connected state, including cell identification, SSB index detection and neighbor cell measurement (intra-frequency measurement, inter-frequency measurement and inter-RAT measurement).

In some embodiments, a measurement sample value is predicted based on the AI/ML model, and the UE averages the actually measured sample value and the sample value predicted based on the AI/ML model to obtain the measurement result value for reporting.

In some embodiments, in order to predict the measurement result value for reporting based on the AI/ML model, and the actually measured sample value is used as input, so that the measurement result value for reporting is predicted and obtained based on the AI/ML model.

In the embodiments of the present disclosure, some or all of the steps and their optional implementations may be arbitrarily combined with some or all of the steps in other embodiments, and may also be arbitrarily combined with the optional implementations of other embodiments.

Embodiments of the present disclosure also provide a device for implementing any of the above methods, for example, a device including units or modules for implementing the steps performed by the terminal in any of the above methods. For another example, another device is also proposed, which includes units or modules for implementing the steps performed by the network device (such as the access network device, the core network function node, the core network device, the terminal, the network devices, etc.) in any of the above methods.

It should be understood that the division of units or modules in the above device is only a division of logical functions. In actual implementation, they may be fully or partially integrated into one physical entity, or may be physically separated. In addition, the units or modules in the device may be implemented in the form of a processor calling software. For example, the device includes a processor, the processor is connected to a memory, the memory stores instructions, and the processor calls the instructions stored in the memory to implement any one of the above methods or the functions of the units or modules of the above device. The processor is, for example, a general-purpose processor, such as a central processing unit (CPU) or a microprocessor, and the memory is a memory inside the device or a memory outside the device. Alternatively, the units or modules in the device may be implemented in the form of a hardware circuit. The functions of some or all units or modules may be implemented by designing the hardware circuit. The hardware circuit may be understood as one or more processors. For example, in an implementation, the hardware circuit is an application-specific integrated circuit (ASIC), and the functions of some or all units or modules above are implemented by designing a logical relationship of components in the circuit. As another example, in another implementation, the hardware circuit may be implemented by a programmable logic device (PLD). Taking a field programmable gate array (FPGA) as an example, it may include a large number of logic gate circuits, and a connection relationship between the logic gate circuits is configured through configuration files, thereby implementing the functions of some or all units or modules above. All units or modules of the above device may be fully implemented in the form of the processor calling software, or fully implemented in the form of the hardware circuit, or partially implemented in the form of the processor calling software and partially implemented in the form of the hardware circuit.

In the embodiments of the present disclosure, a processor is a circuit with a signal processing capability. In an implementation, the processor may be a circuit with a capability to read and run instructions, such as a central processing unit (CPU), a microprocessor, a graphics processing unit (GPU) (which may be understood as a microprocessor), or a digital signal processor (DSP), etc. In another implementation, the processor may implement certain functions through a logical relationship of a hardware circuit. The logical relationship of the hardware circuit is fixed or reconfigurable. For example, the processor is a hardware circuit implemented by an application-specific integrated circuit (ASIC) or a programmable logic device (PLD), such as a field-programmable gate array (FPGA). In a reconfigurable hardware circuit, a process of the processor loading configuration files to implement a hardware circuit configuration may be understood as a process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

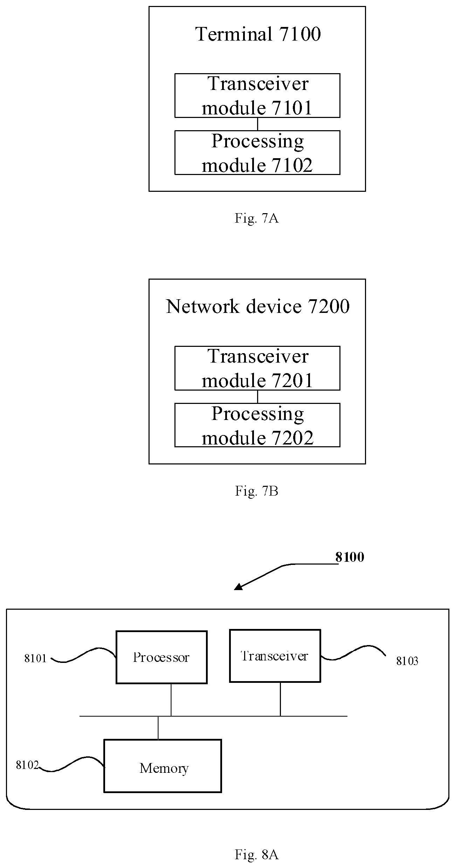

Fig. 7A is an illustrative block diagram of a terminal proposed by an embodiment of the present disclosure. As shown in Fig. 7A, a terminal 7100 may include at least one of a transceiver module 7101 and a processing module 7102. In some embodiments, the transceiver module 7101 is used to send a first measurement result, and the processing module 7102 is used to determine the first measurement result using a first model according to a first measurement sample. Optionally, the transceiver module 7101 is used to perform at least one of the communication steps such as sending and/or receiving steps (e.g., but not limited to, step S2101, step S2102, step S2104, step S2105) performed by the terminal 101 in any of the above methods, which are not repeated here. Optionally, the above processing module 7102 is used to perform at least one of other steps (e.g., but not limited to, step S2103) performed by the terminal 101 in any of the above methods, which are not repeated here.

Fig. 7B is an illustrative block diagram of a network device proposed by an embodiment of the present disclosure. As shown in Fig. 7B, a network device 7200 may include at least one of a transceiver module 7201 and a processing module 7202. In some embodiments, the transceiver module 7201 is configured to receive a first measurement result, the first measurement result is used for radio resource management, and is determined using a first model according to a first measurement sample, and the first measurement sample is actually measured by a terminal. Optionally, the above transceiver module 7201 is used to perform at least one of the communication steps such as sending and/or receiving steps (e.g., but not limited to, step S2101, step S2102, step S2104, step S2105) performed by the network device 102 in any of the above methods, which are not repeated here. Optionally, the above processing module 7202 is used to perform at least one of other steps (e.g., but not limited to, determining first information, etc.) performed by the network device 102 in any of the above methods, which are not repeated here.

In some embodiments, the transceiver module may include a sending module and/or a receiving module, which may be separate or integrated. Optionally, the transceiver module may be replaced with a transceiver.

In some embodiments, the processing module may be one module or include a plurality of sub-modules. Optionally, the plurality of sub-modules respectively perform all or part of the steps required to be performed by the processing module. Optionally, the processing module may be replaced with the processor.

Fig. 8A is an illustrative block diagram of a communication device 8100 proposed by an embodiment of the present disclosure. The communication device 8100 may be a network device (e.g., an access network device, a core network device, etc.), a terminal (e.g., user equipment, etc.), a chip, chip system, or processor that supports the network device to realize any of the above methods, or a chip, chip system, or processor that supports the terminal to realize any of the above methods. The communication device 8100 may be used to implement the methods described in the above method embodiments, and for details, reference may be made to the descriptions in the above method embodiments.

As shown in Fig. 8A, the communication device 8100 includes one or more processors 8101. The processor 8101 may be a general-purpose processor or a special-purpose processor, for example, a baseband processor or a central processing unit. The baseband processor may be used to process communication protocols and communication data, and the central processor may be used to control communication devices (such as base stations, baseband chips, terminals, terminal chips, DUs or CUs, etc.), execute programs, and process program data. The communication device 8100 is used to perform any of the above methods.

In some embodiments, the communication device 8100 further includes one or more memories 8102 for storing instructions. Optionally, all or part of the memories 8102 may be located outside the communication device 8100.

In some embodiments, the communication device 8100 further includes one or more transceivers 8103. When the communication device 8100 includes one or more transceivers 8103, the transceivers 8103 perform at least one of the communication steps such as sending and/or receiving steps (e.g., but not limited to, step S2101, step S2102, step S2103, step S2105, step S2106 and step S2107) of the above methods, and the processor 8101 performs at least one of other steps (e.g., but not limited to, step S2104).

In some embodiments, the transceiver may include a receiver and/or a transmitter, which may be separate or integrated. Optionally, the terms such as transceiver, transceiving unit, transceiving machine, transceiving circuit, etc. may be used interchangeably, the terms such as transmitter, transmitting unit, transmitting machine, transmitting circuit, etc. may be used interchangeably, and the terms such as receiver, receiving unit, receiving machine, receiving circuit, etc. may be used interchangeably.

In some embodiments, the communication device 8100 may include one or more interface circuits 8104. Optionally, the interface circuit 8104 is connected to the memory 8102. The interface circuit 8104 may be used to receive signals from the memory 8102 or other devices, and may be used to send signals to the memory 8102 or other devices. For example, the interface circuit 8104 may read instructions stored in the memory 8102 and send the instructions to the processor 8101.

The communication device 8100 described in the above embodiment may be a network device or a terminal, but the scope of the communication device 8100 described in the present disclosure is not limited to this, and the structure of the communication device 8100 may not be limited by Fig. 8A. The communication device may be a stand-alone device or may be part of a large device. For example, the communication device may be: 1) an independent integrated circuit (IC), or a chip, or a chip system or subsystem; (2) a set with one or more ICs, optionally, the above IC set may also include a storage unit for storing data and programs; 3) an ASIC, such as a modem; 4) a module that may be embedded in other devices; 5) a receiver, a terminal, a smart terminal, a cellular phone, a wireless device, a handset, a mobile unit, a vehicle-mounted device, a network device, a cloud device, an artificial intelligence device, etc.; 6) others, etc.

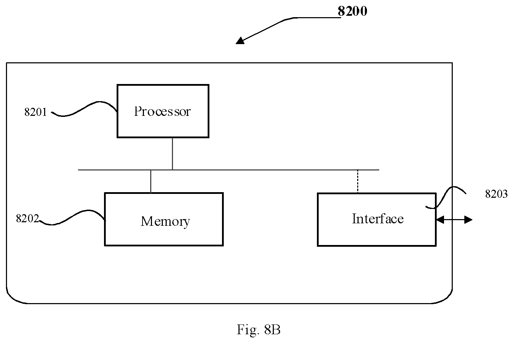

Fig. 8B is an illustrative block diagram of a chip 8200 proposed by an embodiment of the present disclosure. In a case that the communication device 8100 may be a chip or a chip system, reference may be made to the block diagram of the chip 8200 shown in Fig. 8B, but the present disclosure is not limited to this.

The chip 8200 includes one or more processors 8201, and the chip 8200 is used to perform any of the above methods.

In some embodiments, the chip 8200 also includes one or more interface circuits 8202. Optionally, the interface circuit 8202 is connected to the memory 8203, may be used to receive signals from the memory 8203 or other devices, and may be used to send signals to the memory 8203 or other devices. For example, the interface circuit 8202 may read instructions stored in the memory 8203 and send the instructions to the processor 8201.

In some embodiments, the interface circuit 8202 performs at least one of the communication steps such as sending and/or receiving steps (e.g., but not limited to, step S2101, step S2102, step S2103, step S2105, step S2106, step S2107) of the above methods, and the processor 8201 performs at least one of other steps (e.g., but not limited to, step S2104).

In some embodiments, the terms such as interface circuit, interface, transceiver pin, transceiver, etc. may be used interchangeably.

In some embodiments, the chip 8200 further includes one or more memories 8203 for storing instructions. Optionally, all or part of the memories 8203 may be located outside the chip 8200.

The present disclosure also proposes a storage medium on which instructions are stored, which, when executed on the communication device 8100, cause the communication device 8100 to perform any of the above methods. Optionally, the storage medium is an electronic storage medium. Optionally, the storage medium is a computer-readable storage medium, but it is not limited to this, and it may also be a storage medium readable by other devices. Optionally, the storage medium may be a non-transitory storage medium, but it is not limited to this, and it may also be a transitory storage medium.

The present disclosure also proposes a program product which, when executed by the communication device 8100, causes the communication device 8100 to perform any of the above methods. Optionally, the program product is a computer program product.

The present disclosure also proposes a computer program that, when run on a computer, causes the computer to perform any of the above methods.

## Claims

1. A measurement method, performed by a terminal, comprising:
determining a first measurement result using a first model according to a first measurement sample, wherein the first measurement sample is a measurement sample actually measured by the terminal; and
sending the first measurement result, wherein the first measurement result is configured for radio resource management.

2. The method according to claim 1, wherein the first measurement result comprises at least one of:
a measurement result in an idle state;
a measurement result in an inactive state; or
a measurement result in a connected state.

3. The method according to claim 1 or 2, wherein determining the first measurement result using the first model according to the first measurement sample comprises:
determining a second measurement sample using the first model according to the first measurement sample, wherein a sum of a numeric count of the first measurement sample and a numeric count of the second measurement sample is equal to a first numeric count, and the first numeric count is a numeric count of measurement samples required by the terminal to determine the first measurement result without using the first model; and
determining the first measurement result according to the first measurement sample and the second measurement sample.

4. The method according to claim 3, wherein determining the second measurement sample using the first model according to the first measurement sample comprises:
inputting the first measurement sample and a first parameter corresponding to the first model into the first model to obtain the second measurement sample.

5. The method according to any one of claims 3-4, wherein determining the first measurement result according to the first measurement sample and the second measurement sample comprises:
calculating an average value of the first measurement sample and the second measurement sample to obtain the first measurement result.

6. The method according to claim 1 or 2, wherein determining the first measurement result using the first model according to the first measurement sample comprises:
determining the first measurement result using the first model according to the first measurement sample whose numeric count is a second numeric count.

7. The method according to claim 6, wherein determining the first measurement result using the first model according to the first measurement sample whose numeric count is the second numeric count comprises:
inputting consecutive first measurement results whose numeric count is the second numeric count and a second parameter corresponding to the first model into the first model to obtain the first measurement result output by the first model.

8. The method according to claim 7, wherein the second numeric count is a numeric count of measurement samples actually measured within a duration corresponding to N measurement occasions before a current moment, the second numeric count is smaller than the first numeric count, and the first numeric count is a numeric count of measurement samples required by the terminal to determine the first measurement result without using the first model, wherein the first numeric count is equal to N.

9. The method according to any one of claims 1-8, wherein before determining the first measurement result using the first model according to the first measurement sample, the method comprises:
receiving first information configured to indicate the terminal to determine the first measurement result using the first model.

10. The method according to any one of claims 1-9, wherein before determining the first measurement result using the first model according to the first measurement sample, the method comprises:
sending second information indicating that the terminal has a capability to determine the first measurement result using the first model; and
receiving first information, wherein the first information is sent by a network device in response to determining that the second information is received, and the first information is configured to indicate the terminal to determine the first measurement result using the first model.

11. The method according to any one of claims 1-10, comprising:
sending third information indicating that the first measurement result is determined using the first model.

12. The method according to any one of claims 1-11, wherein determining the first measurement result using the first model according to the first measurement sample comprises:
determining that a first condition is satisfied, and determining the first measurement result using the first model according to the first measurement sample, wherein the first condition comprises at least one of:
first information being received, wherein the first information is sent by a network device and configured to indicate the terminal to determine the first measurement result using the first model;
a measurement value of the first measurement sample being greater than or equal to a first measurement threshold; or
a power of the terminal being less than or equal to a first power threshold.

13. The method according to claim 12, wherein the first measurement threshold and/or the first power threshold are indicated by the network device through fourth information.

14. The method according to any one of claims 1-13, wherein the first measurement sample is measured according to a synchronization signal block (SSB) and/or a channel state information reference signal (CSI-RS).

15. A measurement method, performed by a network device, comprising:
receiving a first measurement result, wherein the first measurement result is configured for radio resource management, and the first measurement result is determined using a first model according to a first measurement sample, wherein the first measurement sample is a measurement sample actually measured by a terminal.

16. The method according to claim 15, wherein the first measurement result comprises at least one of:
a measurement result in an idle state;
a measurement result in an inactive state; or
a measurement result in a connected state.

17. The method according to any one of claims 15-16, comprising:
sending first information, wherein the first information is configured to indicate the terminal to determine the first measurement result using the first model.

18. The method according to any one of claims 15-17, comprising:
receiving second information indicating that the terminal has a capability to determine the first measurement result using the first model; and
determining that the second information is received, and sending first information, wherein the first information is configured to indicate the terminal to determine the first measurement result using the first model.

19. The method according to any one of claims 15-18, comprising:
receiving third information indicating that the first measurement result is determined using the first model.

20. The method according to any one of claims 15-19, comprising:
sending fourth information indicating a first measurement threshold and/or a first power threshold, wherein the first measurement threshold and/or the first power threshold are configured for the terminal to determine whether to determine the first measurement result using the first model.

21. The method according to any one of claims 15-20, wherein the first measurement sample is measured according to a synchronization signal block (SSB).

22. A terminal, comprising:
a processing module configured to determine a first measurement result using a first model according to a first measurement sample, wherein the first measurement sample is a measurement sample actually measured by the terminal; and
a transceiver module configured to send the first measurement result, wherein the first measurement result is configured for radio resource management.

23. A network device, comprising:
a transceiver module configured to receive a first measurement result, wherein the first measurement result is configured for radio resource management, and is determined using a first model according to a first measurement sample, and the first measurement sample is a measurement sample actually measured by a terminal.

24. A terminal, comprising:
one or more processors; and
a memory coupled to the one or more processors, and storing executable instructions which are configured to, when executed by the one or more processors, cause the terminal to perform the steps of the method according to any one of claims 1-14.

25. A network device, comprising:
one or more processors; and
a memory coupled to the one or more processors, and storing executable instructions which are configured to, when executed by the one or more processors, cause the network device to perform the steps of the method according to any one of claims 15-21.

26. A communication system, comprising a terminal and a network device, wherein the network device is configured to perform the measurement method according to any one of claims 1-13, and the network device is configured to perform the measurement method according to any one of claims 15-21.

27. A storage medium storing instructions, which are configured to, when run on a communication device, cause the communication device to perform the measurement method according to any one of claims 1-14 or 15-21.
